(19) Europäisches Patentamt
European Patent Office
Office européen des brevets

(11) **EP 4 016 829 A1**

(12) **EUROPÄISCHE PATENTANMELDUNG**

(43) Veröffentlichungstag:
**22.06.2022   Patentblatt 2022/25**

(21) Anmeldenummer: **20214810.2**

(22) Anmeldetag: **17.12.2020**

(51) Internationale Patentklassifikation (IPC):
*H02M 7/48* (2007.01)      *H02M 7/5395* (2006.01)
*H02M 1/00* (2006.01)      *H02M 1/08* (2006.01)
*H02M 1/38* (2007.01)

(52) Gemeinsame Patentklassifikation (CPC):
**H02M 7/4815; H02M 1/0058; H02M 1/083;**
H02M 1/38; H02M 7/5395

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder:
• **Siemens Aktiengesellschaft
80333 München (DE)**

• **Friedrich-Alexander-Universität
Erlangen-Nürnberg
91054 Erlangen (DE)**

(72) Erfinder:
• **Kohlhepp, Benedikt
91054 Erlangen (DE)**
• **Dürbaum, Thomas
91083 Baiersdorf (DE)**
• **Kopf, Michael
90537 Feucht (DE)**

(54)   **STROMRICHTER UND VERFAHREN ZUM BETRIEB EINES STROMRICHTERS**

(57)   Ein Stromrichter mit einer Halbbrücke umfassend wenigstens zwei Halbleiterschalter und eine am Verbindungsknoten der beiden Schalteinrichtungen angeordnete Filterspule ist dazu eingerichtet, durch eine individuelle Anpassung der Schaltzeitpunkte der Halbleiterschalter ein spannungsfreies Einschalten durchzuführen, dabei eine maximale Schaltfrequenz einzuhalten und dabei einen ersten der Halbleiterschalter abzuschalten, wenn der Strom durch die Filterspule 0 A erreicht.

FIG 1

**Beschreibung**

Die Erfindung betrifft einen Stromrichter zur elektrischen Wandlung zwischen einer ersten und mindestens einer zweiten Spannung, wobei der Stromrichter wenigstens zwei Halbleiterschalter umfasst, die eine Halbbrücke bilden und wobei der Stromrichter ein LC-Filter umfasst. Ferner betrifft die Erfindung ein Betriebsverfahren für einen solchen Stromrichter.

Stromrichter mit nachgeschaltetem LC-Filter werden häufig zum Betrieb eines elektromagnetischen Aktors, beispielsweise einer drehenden elektrischen Maschine eingesetzt. Sie werden auch als netzspeisende oder netzgespeiste Umrichter verwendet. Im einfachsten Fall umfasst der Stromrichter zwei seriell zu einer Halbbrücke zusammengeschaltete Halbleiterschalter, die mit einer Pulsweiten-Modulation betrieben werden und so eine Eingangsspannung in eine Ausgangsspannung umwandeln. Für den häufigen Fall eines dreiphasigen Betriebs können drei Halbbrücken mit jeweils zwei Halbleiterschaltern zur Erzeugung eines Dreiphasensystems verwendet werden.

Für den Betrieb eines dreiphasigen Elektromotors kann der Stromrichter auch als dreiphasiger Frequenzumrichter aufgebaut und betrieben werden. Durch eine entsprechende Ansteuerung der Halbleiterschalter wird in diesem Fall ein variabelfrequentes Dreiphasensystem erzeugt, mit dem der Motor oder das Netz gespeist wird.

Die Pulsweiten-Modulation kann prinzipiell mit einer festen Schaltfrequenz für die Halbleiterschalter arbeiten, wobei die feste Schaltfrequenz beispielsweise 5 kHz oder 30 kHz beträgt. In diesem Fall werden die Halbleiterschalter teilweise unter Spannung eingeschaltet und die entstehenden Schaltverluste in Kauf genommen.

Alternativ ist es möglich, die Halbleiterschalter stets spannungslos einzuschalten. Dadurch werden die auftretenden Schaltverluste deutlich reduziert. Zum spannungslosen Einschalten müssen die Schaltzeitpunkte der Halbleiterschalter für jeden Schaltvorgang geeignet gewählt werden, was basierend auf Berechnungen und/oder Messungen erfolgen kann. Die sich ergebenden Schaltzeitpunkte und die sich aus den Schaltzeitpunkten ergebende Schaltfrequenz sind dabei unter anderem abhängig vom Betrag der erzeugten Ausgangsspannung des Stromrichters, der verwendeten Zwischenkreisspannung, dem Ausgangsstrom und Bauteilkennwerten. Unter der Schaltfrequenz wird hierin die Frequenz verstanden, die sich aus zwei aufeinanderfolgenden Schaltvorgängen desselben Typs - also zwei Einschaltvorgänge oder zwei Ausschaltvorgänge - und desselben Schalters ergibt. Liegen beispielsweise die Ausschaltzeitpunkte des oberen Halbleiterschalters 100 μs auseinander, entspricht das einer Schaltfrequenz von 10 kHz. Je nach Steuerverfahren für die Halbleiterschalter kann diese Frequenz fest sein oder variieren.

Während die Schaltverluste dadurch deutlich reduziert werden, ist der sich ergebende Stromrippel erhöht. Unter Stromrippel wird hierin die Differenz zwischen Maximum und Minimum des Filterinduktivitätsstroms innerhalb einer Schaltperiode, die sich durch das hochfrequente Umschalten der anliegenden Spannung ergibt, verstanden. Auch der Stromrippel sorgt für Verluste, beispielsweise Leitverluste in den Halbleiterschalterschaltern, Verluste in den Filter- und Zwischenkreiskondensatoren und Kern- und Wicklungsverluste in der magnetischen Komponente.

Es ist Aufgabe der vorliegenden Erfindung, einen Stromrichter und ein Verfahren zu dessen Betrieb anzugeben, mit denen die eingangs genannten Nachteile vermindert werden, insbesondere die auftretenden Verluste weiter gesenkt werden.

Diese Aufgabe wird durch einen Stromrichter mit den Merkmalen von Anspruch 1 gelöst. Hinsichtlich des Verfahrens besteht eine Lösung in einem Verfahren mit den Merkmalen von Anspruch 12.

Der erfindungsgemäße Stromrichter zur elektrischen Wandlung zwischen einer Gleichspannung und einer Wechselspannung umfasst eine Serienschaltung einer ersten und einer zweiten Schalteinrichtung und eine am Verbindungsknoten der beiden Schalteinrichtungen angeordnete Filterspule.

Weiterhin umfasst der Stromrichter eine Steuereinrichtung zur Ansteuerung der Schalteinrichtungen.

Dabei ist die Steuereinrichtung ausgestaltet, die angesteuerten Schalteinrichtungen mit einer zeitlich veränderlichen Frequenz von wenigstens 10 Hz zu schalten und dafür Schaltzeitpunkte zu bestimmen. Zu jedem Schaltzeitpunkt wird eine der Schalteinrichtungen abgeschaltet und nach Verstreichen einer Totzeit die jeweils andere Schalteinrichtung eingeschaltet. Unter der Totzeit wird also hierin die Zeit zwischen dem Ausschalten einer der Schalteinrichtungen und dem direkt folgenden Einschalten der jeweils anderen Schalteinrichtung verstanden. Dabei ist die Steuereinrichtung ausgestaltet, für jede Schaltperiode umfassend ein Einschalten und Ausschalten beider Schalteinrichtungen die Schaltzeitpunkte für eine der beiden Schalteinrichtungen daraus zu bestimmen, dass der Stromfluss durch die Filterspule 0 A erreicht und eine festlegbare maximale Schaltfrequenz eingehalten wird. Bei dem erfindungsgemäßen Verfahren zum Betrieb eines Stromrichters zur elektrischen Wandlung zwischen einer Gleichspannung und einer Wechselspannung bilden eine erste und eine zweite Schalteinrichtung eine Serienschaltung und werden mit einer zeitlich veränderlichen Frequenz von wenigstens 10 Hz geschaltet.

Dafür werden Schaltzeitpunkte bestimmt, wobei zu jedem Schaltzeitpunkt eine der Schalteinrichtungen abgeschaltet wird und nach Verstreichen einer Totzeit die jeweils andere Schalteinrichtung eingeschaltet wird. Für jede Schaltperiode umfassend ein Einschalten und Ausschalten beider Schalteinrichtungen werden die Schaltzeitpunkte für eine der beiden Schalteinrichtungen daraus bestimmt, dass der Stromfluss durch die Filterspule 0 A erreicht und eine festlegbare maximale Schaltfrequenz eingehalten wird.

Es ist bekannt, ein spannungsloses Einschalten der Halbleiterschalter dadurch zu erreichen, dass eine erste Abschaltschwelle nahe null ist und das andere Vorzeichen zum Sollstrom hat und eine zweite Abschaltschwelle dadurch gegeben ist, dass der Mittelwert der beiden Abschaltschwellen dem Sollstrom, also beispielsweise dem Motorstrom, entspricht. In der positiven Halbschwingung des Motorstroms ist die erste Abschaltschwelle also negativ, in der negativen Halbschwingung ist sie positiv. Dabei bezeichnet die Abschaltschwelle denjenigen Stromfluss in die Filterspule, bei dem der derzeit eingeschaltete Halbleiterschalter abgeschaltet und nach Verstreichen einer Totzeit der jeweils andere Halbleiterschalter eingeschaltet wird. Der Strom steigt und fällt folglich annähernd linear zwischen den beiden Abschaltschwellen. Die Amplitude dieses Stromrippels ist dabei etwas größer als der doppelte Wert des Motorstroms.

Für die Erfindung wurde erkannt, dass die jeweils dem Betrag nach kleinere, zweite Abschaltschwelle nicht ein anderes Vorzeichen haben muss, sondern dass als zweite Abschaltschwelle ein Strom in die Filterspule (Spulenstrom) von 0 A ausreichend ist. Das basiert auf der Erkenntnis, dass die Filterspule und die Ausgangskapazitäten der Halbleiterschalter in der Halbbrücke nach dem Abschalten des aktiven Halbleiterschalters eine resonante Schwingung ausführen. Die resonante Schwingung führt dazu, dass - für den Fall der positiven Halbschwingung des Motorstroms beschrieben - der Spulenstrom, der soeben vom etwa doppelten des Motorstroms bis auf die Abschaltschwelle gefallen ist, noch etwas weiter fällt und somit einen negativen Wert erreicht, der ein verlustreduziertes oder spannungsfreies Einschalten des anderen Halbleiterschalters erlaubt.

Dadurch ergibt sich vorteilhaft, dass der Stromrippel verkleinert ist, da die beiden Abschaltschwellen näher aneinanderrücken. Da der sich aus dem Stromrippel ergebende Mittelwert dem Soll-Strom entsprechen muss, bewirkt eine Anhebung der zweiten Abschaltschwelle in der positiven Halbschwingung des Soll-Stroms eine entsprechende Verkleinerung der ersten Abschaltschwelle, also eine weitere Annäherung der beiden Abschaltschwellen. Der verringerte Stromrippel bewirkt vorteilhaft eine Verringerung der auftretenden Verluste, beispielsweise der direkt Stromrippel-abhängigen Verluste in den Filterkomponenten.

Weiterhin wurde erkannt, dass sich beim reinen spannungsfreien Schalten Schwierigkeiten ergeben, da im Bereich der Nulldurchgänge des Sollstroms die beiden Abschaltschwellen sehr nahe aneinander heranrücken und dadurch mit sehr hoher Frequenz geschaltet werden würde. Diese hohe Schaltfrequenz kann von den Schalteinrichtungen unter Umständen gar nicht geleistet werden. Diese Schwierigkeit wird dadurch vermieden, dass zwischen zwei aufeinander folgenden Schaltzeitpunkten stets ein zeitlicher Mindestabstand eingehalten wird. Dabei wird dieser zeitliche Mindestabstand stets zwischen zwei Schaltzeitpunkten desselben Schalters eingehalten, die denselben Typ von Schaltvorgang betreffen, d. h. zwischen zwei Ausschaltvorgängen oder zwischen zwei Einschaltvorgängen. Der zeitliche Abstand zwischen einem Ausschaltvorgang und einem Einschaltvorgang desselben Schalters oder umgekehrt kann dagegen weiterhin sehr kurz bleiben, da dieser Abstand für die Einstellung der Ausgangsspannung verantwortlich ist, also für die Pulsweiten-Modulation verwendet wird.

Durch die Einhaltung des zeitlichen Mindestabstands zwischen zwei Einschaltzeitpunkten oder zwei Ausschaltzeitpunkten desselben Schalters wird eine obere Grenze für die Schaltfrequenz bewirkt, die während des Betriebs nicht überschritten wird. Dadurch werden Probleme mit den Schalteinrichtungen, die bei zu hoher Schaltfrequenz auftreten, vorteilhaft vermieden. Dabei wird das spannungslose Einschalten beibehalten. Die Anforderung des Schaltens mit einer möglichst hohen Frequenz, um den sich ergebenden Stromrippel gering zu halten und die auftretenden Leitverluste zu vermindern, wird dagegen zweitrangig behandelt. Gleichzeitig wird so in den Bereichen, in denen ein spannungsloses Schalten ohne eine Unterschreitung des zeitlichen Mindestabstands möglich ist, bei einer Abschaltschwelle von 0 A geschaltet, was zu einer hohen Effizienz des Stromrichters führt.

Die Steuereinrichtung kann beispielsweise ausgestaltet sein, eine maximale Frequenz von weniger als 150 kHz zu verwenden. Hierdurch wird zusätzlich noch erreicht, dass die Emission von elektromagnetischen Störungen der Grundfrequenz zu jeder Zeit in dem Frequenzbereich von unterhalb 150 kHz gehalten wird. Störungen oberhalb von 150 kHz entstehen daher nur als Oberschwingungen der Grundfrequenz. Dadurch wird die Einhaltung von verhältnismäßig strikten EMV-Standards, die in dem Frequenzband von 150 kHz bis 30 MHz vorliegen, erleichtert.

Der Stromrichter kann dabei einphasig oder mehrphasig ausgeführt sein, beispielsweise dreiphasig. Ein dreiphasiger Stromrichter kann drei parallel geschaltete Halbbrücken mit jeweils zwei Schalteinrichtungen aufweisen. Die Steuereinrichtung des dreiphasigen Stromrichters kann weiterhin ausgestaltet sein, ein dreiphasiges sinusförmiges Spannungssystem zu erzeugen, also Spannungen, die um 120° zueinander phasenversetzt sind.

In einem mehrphasigen Stromrichter, insbesondere einem dreiphasigen, ist die Steuereinrichtung bevorzugt ausgestaltet, die Halbbrücken erfindungsgemäß anzusteuern. Dabei wird die beschriebene Vorgehensweise bevorzugt in unabhängiger Weise für die Halbbrücken umgesetzt, d.h. die ermittelten Schaltzeitpunkte der Halbleiterschalter einer ersten der Halbbrücken beeinflussen nicht die Schaltzeitpunkte der Halbleiterschalter der anderen Halbbrücken.

Der Stromrichter wird bevorzugt als Wechselrichter betrieben oder ist Teil eines Umrichters, insbesondere eines Frequenzumrichters. Dabei liegt eine Eingangsspannung an den Außenanschlüssen der Serienschaltung der zwei Schalteinrichtungen an, üblicherweise eine Zwischenkreis-Gleichspannung. An seinem Ausgang erzeugt der Stromrichter dann eine Wechselspannung, entweder mit Netzfrequenz, also mit beispielsweise 50 Hz oder 60 Hz, oder mit einer variablen Frequenz, mit der beispielsweise ein Elektromotor angesteuert wird.

Der Stromrichter kann also generell Teil eines größeren Stromrichters sein, der weitere Wandlungen zwischen Spannung durchführt, sodass insgesamt beispielsweise ein Umrichter oder DC/DC-Wandler ausgebildet ist.

Weitere vorteilhafte Ausgestaltungen des erfindungsgemäßen Stromrichters und des erfindungsgemäßen Verfahrens gehen aus den abhängigen Ansprüchen hervor. Dabei können die Ausführungsformen der unabhängigen Ansprüche mit den Merkmalen eines der Unteransprüche oder vorzugsweise auch mit denen aus mehreren Unteransprüchen kombiniert werden. Demgemäß können noch zusätzlich folgende Merkmale vorgesehen sein:

Der Teil der Schaltzeitpunkte, der anhand eines Stroms in die Filterspule von 0 A bestimmt wird, kann im Wesentlichen der Hälfte der Schaltzeitpunkte entsprechen. Insbesondere kann jeder zweite Schaltzeitpunkt so bestimmt werden. Dabei ist es möglich, dass in Teilbereichen der Soll-Stromschwingung diese Schaltzeitpunkte nicht so bestimmt oder nicht verwendet werden, beispielsweise in Bereichen nahe des Nulldurchgangs der Soll-Stromschwingung, da in diesen Bereichen die sich ergebende Schaltfrequenz zu hoch würde. Der Teil der Schaltzeitpunkte, der anhand eines Stroms in die Filterspule von 0 A bestimmt wird, wird aber stets in einem nicht unerheblichen Teil der Soll-Stromschwingung so bestimmt, so dass in jeder Soll-Stromschwingung eine Zahl von Schaltzeitpunkten so bestimmt und verwendet wird, die wesentlich größer als 1 ist, insbesondere größer als 10 und in einer besonderen Ausgestaltung größer als 100. Insbesondere wird die Bestimmung der Schaltzeitpunkte nach dieser Art für wenigstens 10% der Schaltzeitpunkte oder wenigstens 30% der Schaltzeitpunkte verwendet.

Zur Bestimmung des Zeitpunkts, zu dem der Strom durch die Filterspule 0 A erreicht, kann eine Strommessung und ein Vergleich mit einem Schwellwert von 0 A verwendet werden. In dieser Ausgestaltung ist der Vergleich einfach, da ein fester Vergleichswert verwendet wird. Für den Vergleich kann ein Komparator verwendet werden. Der an den Komparator angelegte Vergleichswert, der für 0 A steht, ist fest und muss nicht kontinuierlich angepasst werden.

Zur Bestimmung des Zeitpunkts, zu dem der Strom durch die Filterspule 0 A erreicht, kann alternativ eine Strommessung und ein Vergleich mit einem von 0 A verschiedenen Schwellwert verwendet werden, wobei der Schwellwert unter Berücksichtigung einer Verzögerungszeit ermittelt wird, wobei die Verzögerungszeit der zeitliche Abstand zwischen dem Erreichen des Schwellwerts und der tatsächlichen Abschaltung der Schalteinrichtung ist. Hierdurch wird in den Ablauf die Erkenntnis einbezogen, dass die Schalteinrichtungen ohnehin nicht sofort bei Erreichen der Abschaltschwelle tatsächlich abschalten, sondern erst nach dem weiteren Verstreichen der Verzögerungszeit. Da während dem Verstreichen der Verzögerungszeit der Spulenstrom - wiederum im Beispiel der positiven Halbschwingung - weiter fällt, kann der Abschaltzeitpunkt gegenüber dem exakten Erreichen von 0 A etwas vorgezogen werden. Bei richtiger Berücksichtigung der Verzögerungszeit fällt der Strom nach Erreichen der Abschaltschwelle bis zum tatsächlichen Abschalten auf 0 A. Es wird dadurch eine weitere Reduktion des Spulenstromrippels erreicht und damit eine weitere Reduzierung der Verluste.

Es ist möglich, die Abschaltschwelle unter Einbeziehung der momentanen Ausgangsspannung des Stromrichters zu bestimmen. Beispielsweise kann die Abschaltschwelle $I_{t1}$ berechnet werden zu

$$I_{t1} = \frac{\frac{1}{2}U_i - u_o(t)}{L_o} \cdot t_{pd}$$

wobei $U_i$ die Zwischenkreisspannung, $u_o(t)$ die zum Zeitpunkt t vorliegende Ausgangsspannung, $L_o$ die Induktivität der Filterspule und $t_{pd}$ die Verzögerungszeit ist. Dadurch wird die Abschaltschwelle sehr genau bestimmt und die anfallenden Verluste sind so gering wie möglich unter der Randbedingung des spannungslosen Einschaltens. Dabei ist in die Berechnung einbezogen, dass die Änderung des Stroms während der Verzögerungszeit von den Momentanwerten der Spannung im Stromrichter abhängt, da diese die Stromsteilheit beeinflussen. Diese Genauigkeit erfordert aber die Berechnung eines Sinus-Werts. Eine genaue Berechnung ist für die üblicherweise verwendeten Mikrocontroller aufwendig. Es gibt verschiedene Methoden, die Sinus-Berechnung zu vereinfachen. Eine vorteilhafte Möglichkeit ist die Verwendung der Spannungsamplitude an der Stelle des Sinus-Terms. Änderungen der Spannungsamplitude sind im Vergleich zu den Schalthandlungen der Halbleiterschalterschalter langsam und der Wert der Spannungsamplitude daher annähernd unveränderlich.

Ein anderer Teil der Schaltzeitpunkte kann dadurch bestimmt werden, dass der Strom durch die Filterspule einen zweiten Stromschwellwert erreicht, wobei der zweite Stromschwellwert für diesen Schaltzeitpunkt unter Berücksichtigung des momentanen Ausgangsstroms des Stromrichters ermittelt wird. Der zweite Stromschwellwert ist dabei im Wesentlichen das Doppelte des momentanen Soll-Stromwerts. Alternativ kann dieser Teil der Schaltzeitpunkte auch durch eine Berechnung, also ohne Messung ermittelt werden.

Vorteilhaft kann für wenigstens einen Teil der Schaltvorgänge eine jeweils eigene Totzeit bestimmt und verwendet werden, wobei die Totzeit unter Berücksichtigung der Ausgangskapazitäten der Schalteinrichtungen und der Filterinduktivität bestimmt wird. Dadurch kann sichergestellt werden, dass die Halbleiterschalterschalter spannungsfrei eingeschaltet werden. Die Totzeit wird bevorzugt unter Berücksichtigung der momentanen Ausgangsspannung berechnet. Ebenso wie bei der Ermittlung der Abschaltstromschwellen ist die genaue Berechnung einer Totzeit aufwendig und eine Vereinfachung wird dadurch erreicht, dass die Totzeit durch eine Polynomfunktion oder trigonometrische Funktion dem Ergebnis einer Berechnung unter Berücksichtigung der momentanen Ausgangsspannung angenähert wird. Dabei ist es besonders vorteilhaft, wenn die Funktion so gewählt wird, dass ihre Werte vollständig gleich oder oberhalb dem Ergebnis einer Berechnung liegen.

Die Schalteinrichtungen umfassen Halbleiterschalterschalter, insbesondere einen GaN-basierten Schalter oder einen SiC-basierten Schalter. Besonders die Wide-Bandgap-Schalter erlauben eine hohe Schaltfrequenz. Dadurch kann eine Minimierung des Stromrippels und somit eine Minimierung der Leitverluste in einem möglichst weiten Bereich der Betriebszustände durchgeführt werden. Die Schalteinrichtungen können jeweils genau einen Halbleiterschalter umfassen. Damit sind sie als minimale Halbbrücke ausgeführt.

Im Folgenden wird die Erfindung anhand der Figuren der Zeichnung im Zusammenhang mit einem Ausführungsbeispiel näher beschrieben und erläutert.

Dabei zeigen

Figur 1    einen einphasigen Stromrichter mit einer Halbbrücke,

Figur 2    einen dreiphasigen Stromrichter,

Figur 3    Kurvenformen für den zeitlichen Verlauf Strömen und Spannungen innerhalb des Umrichters für eine Grundschwingung,

Figur 4    den Stromverlauf für eine Schaltperiode der Halbbrücke,

Figur 5    den Verlauf des Soll-Stroms und der Abschaltstromschwellen für die positive Halbschwingung des Soll-Stroms bei genauer Berechnung,

Figur 6    den Verlauf des Soll-Stroms und der Abschaltstromschwellen für die positive Halbschwingung des Soll-Stroms bei vereinfachter Berechnung,

Figur 7    den Verlauf der optimalen Totzeit und Näherungen dafür über eine Halbschwingung des Soll-Stroms.

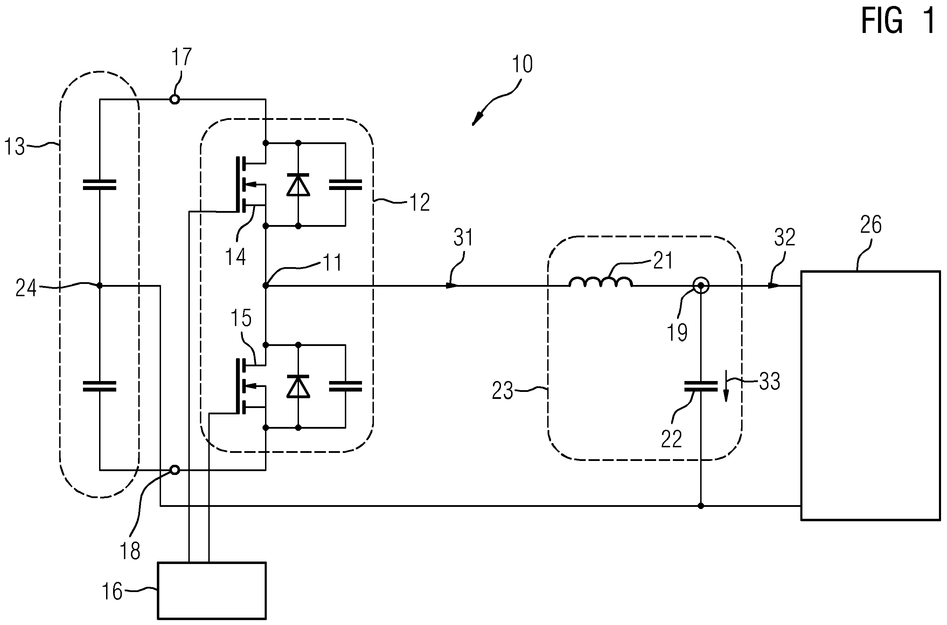

Fig. 1 zeigt einen einphasigen, einfachen Stromrichter 10. Der Stromrichter 10 umfasst eine Halbbrücke 12, die eine Serienschaltung von einem oberen Halbleiterschalter 14 und einem unteren Halbleiterschalter 15 aufweist. Die Halbleiterschalter sind in diesem Beispiel Si-MOSFETs, können aber in anderen Ausführungen auch IGBT-, GaN- oder SiC-basierte Schalter sein.

Ein oberer Anschluss der Halbbrücke 12 bildet dabei einen ersten Anschluss 17 des Stromrichters 10 aus, der in Anwendungen häufig mit dem positiven Pol einer Gleichspannung, beispielsweise des in Figur 1 gezeigten Gleichspannungs-Zwischenkreises 13 verbunden wird.

Ein unterer Anschluss der Halbbrücke 12 bildet einen zweiten Anschluss 18 des Stromrichters 10 aus, der in Anwendungen häufig mit dem negativen Pol der Gleichspannung, beispielsweise des Gleichspannungs-Zwischenkreises 13 oder einem anderen Bezugspotential verbunden wird.

Der Potentialpunkt 11, der zwischen dem oberen Halbleiterschalter 14 und dem unteren Halbleiterschalter 15 liegt, ist mit einer Drossel 21 verbunden, die zusammen mit einem Kondensator 22 ein LC-Filter 23 ausbildet. Der Potentialpunkt zwischen der Drossel 21 und dem Kondensator 22 bildet einen dritten Anschluss 19 des Stromrichters 10. Der dritte Anschluss 19 ist in Anwendungen des Stromrichters 10 häufig ein Wechselspannungs-Anschluss. Im in Figur 1 dargestellten Beispiel ist der Stromrichter 10 mit einer Last, beispielsweise einem Motor 26 verbunden.

Das Bezugspotential, mit dem der Kondensator 22 abseits vom dritten Anschluss 19 verbunden ist, ist der Mittelpunkt 24 des Gleichspannungszwischenkreises 13. Dieses Bezugspotential wird auch für den Anschluss des Motors 26 verwendet.

Wird der Stromrichter 10 als Wechselrichter oder als Teil eines Umrichters eingesetzt, dann wird die zu erzeugende Wechselspannung typischerweise durch eine Pulsweiten-Modulation der beiden Halbleiterschalter 14, 15 ausgebildet. Bei der Pulsweiten-Modulation sind die beiden Halbleiterschalter 14, 15 im Wesentlichen, abgesehen von relativ kurzen Totzeiten, abwechselnd eingeschaltet. Dadurch liegt abwechselnd die am ersten Anschluss 17 des Stromrichters 10 und die am zweiten Anschluss 18 des Stromrichters 10 angeschlossene Spannung am Potentialpunkt 11 zwischen den Halbleiterschaltern 14, 15 an.

Die Schaltfrequenz, mit der die Halbleiterschalter geschaltet werden, ist dabei hoch gegenüber der Frequenz der auszugebenden Wechselspannung. Typischerweise ist die Schaltfrequenz im kHz-Bereich, beispielsweise 5 kHz oder 20 kHz, wenn die zu erzeugende Wechselspannung netzfrequent ist. Der verwendete Tastgrad der beiden Halbleiterschalter 14, 15 bestimmt dabei das mittlere Spannungsniveau am Potentialpunkt 11. Die nachfolgende Tiefpass-Filterung, beispielsweise mit dem LC-Filter 23, wird verwendet, um die hochfrequenten Spannungsanteile, die der Wechselspannung aufgeprägt sind, zu reduzieren, also die Wechselspannung zu glätten.

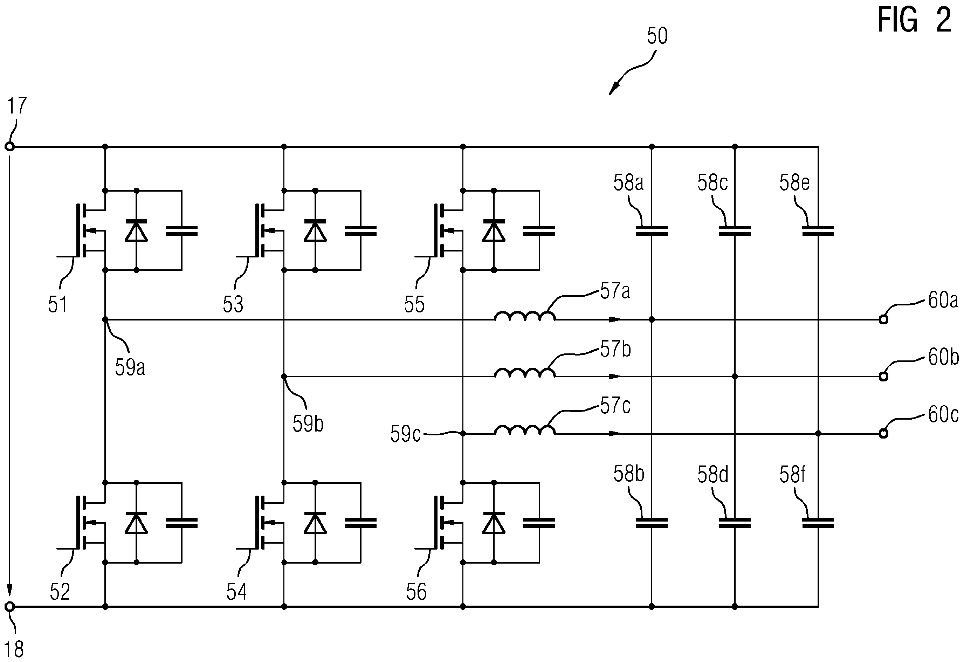

Figur 2 zeigt einen dreiphasigen Stromrichter 50 gemäß einem weiteren Ausführungsbeispiel für die Erfindung. Der dreiphasige Stromrichter kann beispielsweise zum Betrieb eines Motors mit variabler Drehfrequenz eingesetzt werden. Wie beim einphasigen Stromrichter 10 von Figur 1 ist an die Anschlüsse 17, 18 beim dreiphasigen Stromrichter 50 typischerweise ein Gleichspannungs-Zwischenkreis 13 geschaltet, der in Figur 2 nicht dargestellt ist.

Weiterhin sind parallel zueinander zwischen die Anschlüsse 17, 18 drei Halbbrücken mit jeweils zwei in Serie geschalteten Halbleiterschaltern 51...56 geschaltet. Diese Halbbrücken entsprechen in der Funktion der Halbbrücke 12 des einphasigen Stromrichters 10, wobei jede der Halbbrücken hier einer der Phasen der Ausgangsspannung zugeordnet ist.

Die Mittelpunkte 59a...c der Halbbrücken sind jeweils mit einem LC-Filter verbunden. Dieser umfasst pro Phase eine Drossel 57a...c und zwei Kondensatoren 58a...f, von denen jeweils einer mit dem ersten Anschluss 17 und einer mit dem zweiten Anschluss 18 verbunden ist. Der Potentialpunkt zwischen der jeweiligen Drossel 57a...c und den jeweiligen Kondensatoren 58a...f bildet einen Lastanschluss 60a...c für die jeweilige Phase.

Durch eine entsprechende Ansteuerung der Halbleiterschalter 51...56 wird ein variabelfrequentes Dreiphasensystem erzeugt, mit dem der Motor gespeist wird. Der Motor erhält so ein sinusförmiges Dreiphasensystem mit nur geringem Oberschwingungsanteil.

In vielen Anwendungen wird dabei eine feste Schaltfrequenz verwendet, um die Pulsweiten-Modulation durchzuführen, wobei die genaue Frequenz von der Art der eingesetzten Halbleiterschalter 14, 15 und vielen anderen Parametern abhängt. Dabei können die Halbleiterschalter hart geschaltet werden, also ohne Rücksicht darauf, ob beispielsweise beim Einschalten eine Spannung über dem Halbleiterschalter 14, 15 anliegt oder nicht. Dadurch ergeben sich merkliche Schaltverluste.

Die sich beim harten Einschalten der Halbleiterschalter 14, 15 ergebenden Schaltverluste können gesenkt werden, wenn die Schaltzeitpunkte so gewählt werden, dass stets ein spannungsloses Einschalten der Halbleiterschalter 14, 15 durchgeführt wird. Wird dabei eine feste Schaltfrequenz beibehalten, ergibt sich aber ein erheblicher Stromrippel, der zu Leitungsverlusten und Stromrippel-bedingten Verlusten in den Filterkomponenten führt.

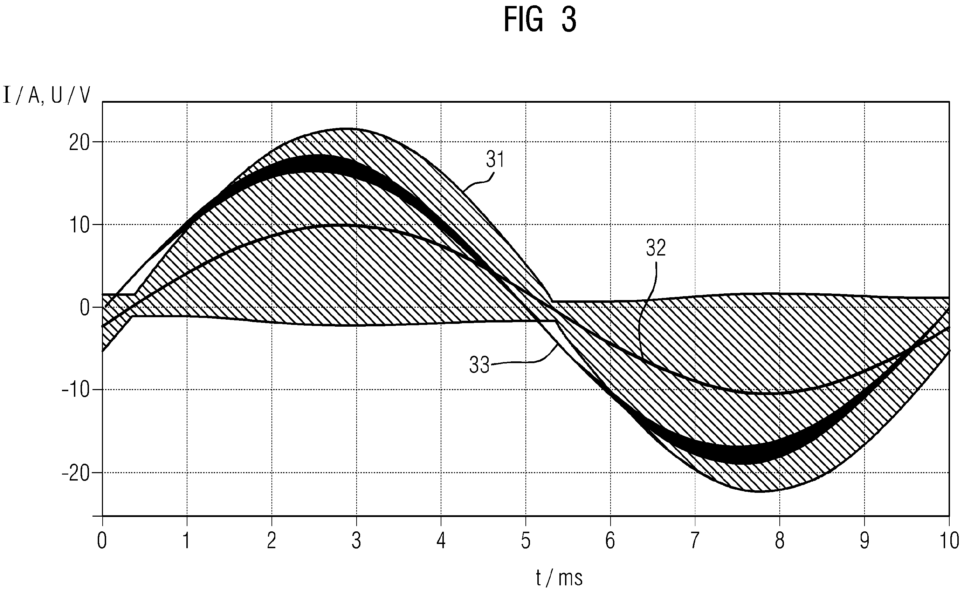

Eine weitere Verbesserung ergibt sich, wenn von der festen Schaltfrequenz abgegangen wird und stattdessen eine variable Schaltfrequenz verwendet wird. In Figur 3 ist der Verlauf des sich ergebenden Stroms 31 der Drossel 21 dargestellt, zusammen mit dem Verlauf des gefiltert Stroms 32 und der Wechselspannung 33 zwischen dem dritten Anschluss 19 und dem Bezugspotential am Zwischenkreismittelpunkt 24. Der Strom 31 der Drossel 21 ist als Fläche dargestellt, da er einen Stromrippel mit einer deutlich höheren Frequenz als der Motorstromfrequenz aufweist. Der Stromrippel in der Drossel 21 entsteht durch die an der Drossel 21 anliegende Spannung, die sich aus der am ersten und zweiten Anschluss 17, 18 anliegenden Spannung, beispielsweise einer Zwischenkreisspannung und der Motorspannung 33 und der Modulation bestimmen lässt.

Der Mittelwert des Stroms 31 entspricht bei Vernachlässigung des kapazitiven Umladestroms der Filterkapazität dem Motorstrom 32. Dabei erfolgt die Einstellung der Schaltfrequenz und des Tastgrads der Halbbrücke 12 so, dass sich ein Stromverlauf ausbildet, der es erlaubt, beide Halbleiterschalter 14, 15 über die gesamte Motorstromperiode spannungslos einzuschalten.

Das ist für das Beispiel der positiven Halbschwingung für den unteren Halbleiterschalter 15 üblicherweise unproblematisch, da der Strom positiv ist. Um ein spannungsfreies Einschalten aber auch für den oberen Halbleiterschalter 14 zu erreichen, kann mit der Vorgabe gearbeitet werden, dass der Strom 31 zum Abschaltzeitpunkt des unteren Halbleiterschalters 15 ein negatives Vorzeichen hat. Für die negative Halbschwingung wird mit der Vorgabe gearbeitet, dass der Strom 31 zum Abschaltzeitpunkt des oberen Halbleiterschalters 14 ein positives Vorzeichen hat.

Zusätzlich muss die Totzeit entsprechend gewählt und die Ausgangskapazität vor dem Einschalten des jeweiligen Halbleiterschalters 14, 15 umgeladen werden. Erst bei einer in etwa auf 0 V entladenen Ausgangskapazität darf der Halbleiterschalter 14, 15 eingeschaltet werden, um spannungsloses Schalten zu garantieren. Typischerweise wird der Strom 31 so geformt, dass spannungsloses Schalten sicher erreicht wird und gleichzeitig nicht zu große Stromwerte auftreten, da diese Leitverluste hervorrufen.

Eine weitere Reduzierung der Verluste kann erreicht werden, indem anstelle des negativen Stromanfangswerts (in der positiven Halbschwingung des Stroms) eine Stromschwelle von 0 A verwendet wird, um verlustarmes Einschalten für den oberen Halbleiterschalter in der positiven Halbschwingung zu erreichen. In der negativen Halbschwingung wird die Stromschwelle von 0 A für das Abschalten des oberen Schalters und das nachfolgende spannungslose Einschalten des unteren Halbleiterschalters verwendet. Das basiert auf der Erkenntnis, dass die Filterinduktivität und die Ausgangskapazitäten der Halbleiterschalter 14, 15 nach dem Nullwerden des Spulenstroms eine resonante Schwingung ausführen. Als Spulenstrom wird hier der Einfachheit halber der Stromfluss durch die Filterinduktivität bezeichnet. Die resonante Schwingung kann zum verlustreduzierten Schalten genutzt werden. Bei günstigen Spannungsverhältnissen im Umrichter kann sogar spannungsloses Schalten erreicht werden, woraus drastisch reduzierte Schaltverluste (es fallen nahezu keine mehr an) resultieren.

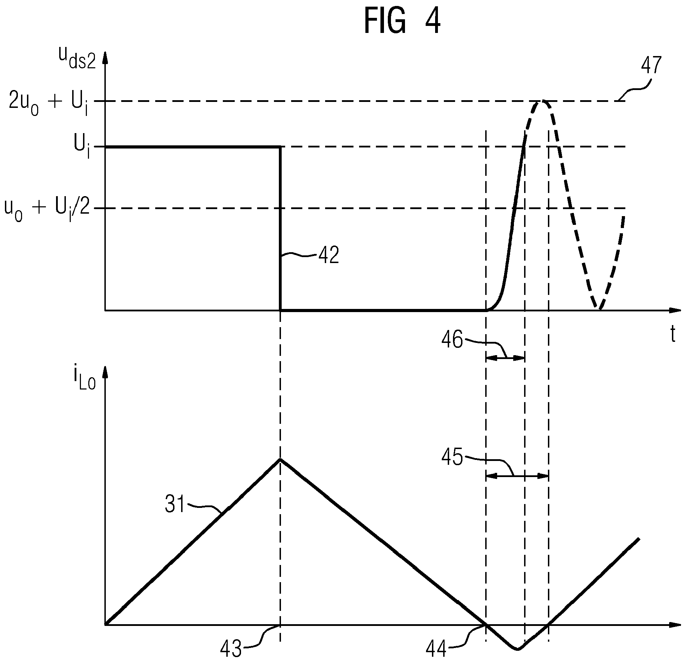

Der Verlauf des Stroms 31 in die Filterinduktivität 21 und Spannung 42 über dem unteren Halbleiterschalter 15 in einer beispielhaften Schaltperiode sind in Figur 4 dargestellt. Nachfolgend wird davon ausgegangen, dass der Stromrichter sich gerade in der positiven Sinushalbschwingung des Soll-Stroms befindet. Des Weiteren wird von einem Phasenwinkel zwischen Sinusstrom und -spannung von 0 ° ausgegangen, was der Situation in einem netzgespeisten oder netzspeisenden Umrichter entspricht.

Zu Beginn des gezeigten Zeitraums ist der obere Halbleiterschalter eingeschaltet. Solange der obere Halbbrückenschalter 14 eingeschaltet bleibt, steigt der Strom 31 linear an. Zu einem ersten Zeitpunkt 43 schaltet der obere Halbbrückenschalter 14 aus und nach Ablauf einer Totzeit der untere ein, woraufhin der Strom 31 wieder fällt. Kurz vor dem Nullwerden des Stroms 31 zum zweiten Zeitpunkt 44 wird der untere Halbbrückenschalter 15 wieder abgeschaltet und folglich kommutiert der Strom auf die parasitäre Body-Diode (oder im Falle von GaN-Schaltern leitet das Bauteil rückwärts), bis der Strom 31 den Wert 0 A erreicht.

Danach ist die Spannung 42 über dem unteren Schalter nicht mehr geklemmt und die Ausgangskapazitäten beider Halbbrückenschalter 14, 15, die dynamisch betrachtet parallel geschaltet sind, führen zusammen mit der Filterinduktivität 21 eine resonante Schwingung aus. In der Folge sinkt dadurch der Strom 31 weiter unter 0 A und die Spannung 42 schwingt - soweit nicht einer der Halbleiterschalter 14, 15 eingeschaltet wird - bis zu einem Spannungsmaximum 47 und wieder zurück. Das Spannungsmaximum 47 liegt dabei bei $U_i + 2.u_o$. Dieses Spannungsmaximum 47 ist ein theoretischer Wert; in einer realen Halbbrücke wird dieser Wert nicht erreicht, sofern er oberhalb der Zwischenkreisspannung liegt, da dann die parasitäre Bodydiode des oberen Halbleiterschalters 14 leitend wird und die Spannung auf die Zwischenkreisspannung $U_i+U_F$ klemmt, wobei $U_F$ die Flussspannung der Bodydiode ist.

Bei günstigen Spannungsverhältnissen im Umrichter kann durch diese parasitäre Schwingung die Spannung über dem oberen Halbbrückenschalter 14 0 V bzw. die Spannung über dem unteren Schalter 15 die Zwischenkreisspannung $U_i$ erreichen. Damit kann der obere Halbleiter 14 verlustarm unter sogenanntem spannungslosem Schalten (engl. Zero Voltage Switching, ZVS) eingeschaltet werden. Das Spannungsmaximum 47 ist wenigstens gleich der Zwischenkreisspannung, wenn die Ausgangsspannung $u_o > 0$ V ist. In diesem Fall ist also das Kriterium erfüllt, um spannungsloses Einschalten auch bei Nullstrom zu erreichen. Beträgt die Phasenverschiebung zwischen dem Sollstrom und der Ausgangsspannung 0°, dann ist die Voraussetzung $u_o > 0$ V bei $I_{soll} > 0$ A automatisch erfüllt. Liegt aber eine Phasenverschiebung ungleich 0° vor, dann entstehen Bereiche in der Stromschwingung, in denen Strom und Spannung voneinander verschiedene Vorzeichen aufweisen. In diesen Bereichen wird in Abweichung von dem beschriebenen Vorgehen eine untere Abschaltschwelle - für die positive Halbschwingung - verwendet, die negativ ist. Mit anderen Worten wird also in diesen Teilbereichen der Stromschwingung nicht schon bei 0 A Strom in der Drossel 21 abgeschaltet, sondern erst bei negativem Strom.

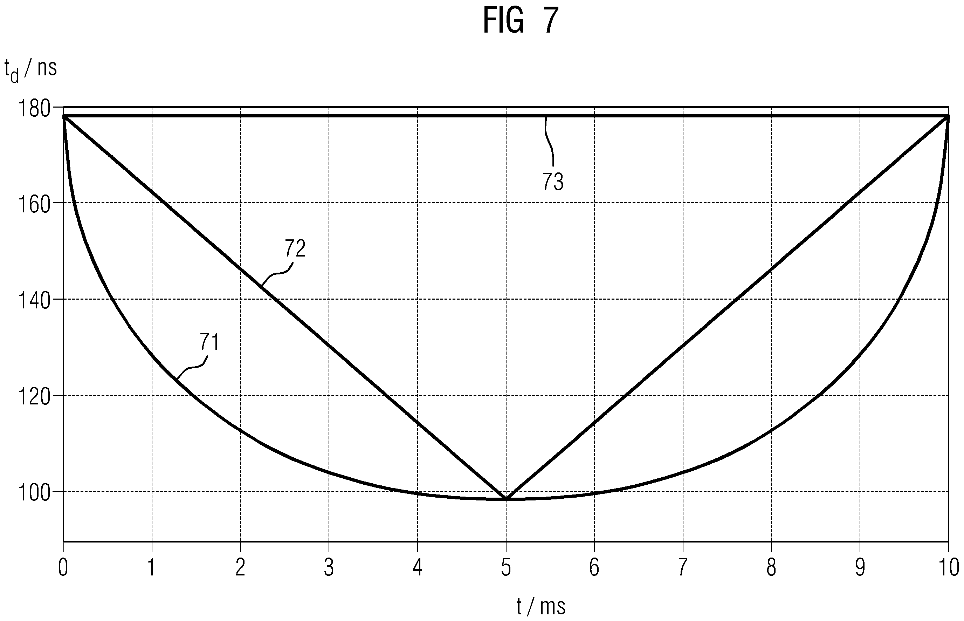

Aus Figur 4 ist weiterhin ersichtlich, dass die Spannung 42 über dem unteren Halbleiterschalter 15 nur für eine kurze Zeit über die Zwischenkreisspannung $U_i$ hinausschwingt. In diesem Bereich muss das Einschalten des oberen Halbleiterschalters 14 erfolgen, damit es spannungslos passiert. Dadurch ist ein Bereich aus einer minimalen Totzeit 46 und einer maximalen Totzeit 45 festgelegt. Die Bestimmung der Totzeiten und die Festlegung einer optimalen Totzeit wird mit Bezug auf Fig. 7 erläutert.

Werden die Abschaltschwellen aus der Betrachtung, die Figur 4 zugrunde liegt, bestimmt, ergeben sich bei einem sinusförmigen Verlauf des Sollstroms die folgenden Abschaltschwellen:

$$i_{lower}(t) = 0$$

$$i_{upper}(t) = 2 \cdot \hat{i}_{Soll} \cdot \sin \omega t$$

wobei $i_{lower}$ die untere Abschaltschwelle, $i_{upper}$ die obere Abschaltschwelle, $\hat{i}_{Soll}$ die Amplitude des Soll-Stroms des Stromrichters 10, 50 ist und $\omega = 2\pi f$, wobei f die Frequenz des Soll-Stroms ist.

In den Nulldurchgängen des Sollstroms erreicht die sich aufgrund des Modulationsverfahrens ergebende Schaltfrequenz der Halbbrücke sehr hohe Werte. Diese wird zum Schutz der Leistungselektronik - manche Bauteile sind nur bis zu einer Maximalfrequenz spezifiziert - begrenzt. Das hat auch Vorteile aus Sicht der elektromagnetischen Verträglichkeit. Beispielsweise gilt für viele Applikationen am Versorgungsnetz eine Begrenzung der ausgesandten Störungen im Frequenzbereich von 150 kHz bis 30 MHz. Dafür kann zum Beispiel eine Maximalfrequenz $f_{Max}$ von 140 kHz herangezogen werden. Folglich wird also, wenn die sich aus den Abschaltschwellen ergebende Schaltfrequenz höher als die Maximalfrequenz $f_{Max}$ wird, der Betrieb stattdessen mit einer festen Schaltfrequenz $f_{Max}$ fortgeführt. Dies geschieht solange, bis die aus den beiden oben genannten Gleichungen resultierende Schaltfrequenz wieder unter die Maximalfrequenz $f_{Max}$ sinkt.

Die hohe Schaltfrequenz im Bereich der Nulldurchgänge des Sollstroms ergibt sich daraus, dass in diesen Bereichen der Stromschwingung die beiden Abschaltschwellen nahe zueinander rücken. Da die Höhe des Stromrippels gerade der Abstand der Abschaltschwellen ist, würde der Stromrippel bei geringem Abstand, also hoher Schaltfrequenz sehr klein werden, was im Prinzip vorteilhaft wäre. Beim Betrieb mit einer Maximalfrequenz $f_{Max}$ ergibt sich aber ein gegenüber höherer Schaltfrequenz vergrößerter Stromrippel. Dieser wird in Kauf genommen, da der Betrieb oberhalb der verwendeten Maximalfrequenz größere Nachteile hätte.

Eine Verbesserung ergibt sich weiterhin, wenn die Verzögerungszeit, die zwischen dem Erreichen der Abschaltschwelle, also dem Signal eines Komparators und dem tatsächlichen Abschalten des jeweiligen Halbleiterschalters auftritt, in die Lage der Abschaltschwellen einbezogen wird. Während der Verzögerungszeit der Schaltung steigt oder fällt der Spulenstrom weiter. Dadurch ergibt sich bei Vorgabe einer bestimmten Umschaltschwelle der Komparatoren ein davon abweichender Strom, bei dem die Halbbrücke umschaltet. Um also bei dem eigentlich gewünschten Stromwert abzuschalten, kann also die Abschaltschwelle so gelegt werden, dass die Auslösung der Abschaltung, also das Signal des Komparators, bereits etwas früher bewirkt wird. Um die Stromänderung während der Verzögerungszeit zu berücksichtigen müssen die Komparator-Umschaltschwellen wie folgt modifiziert werden - weiterhin für die positive Halbschwingung des Sollstroms dargestellt:

$$i_{lower}(t) = -\Delta i_{pd,f}(t)$$

$$i_{upper}(t) = 2 \cdot \hat{i}_{Soll} \cdot \sin \omega t - \Delta i_{pd,r}(t)$$

Dabei ist $\Delta i_{pd,r}$ die Stromänderung des Spulenstroms während der Verzögerungszeit $t_{pd}$ für den Umschaltvorgang der Halbbrücke, wenn der obere Halbleiterschalter 14 abgeschaltet werden soll und nach Ablauf der Totzeit der untere Halbleiterschalter 15 eingeschaltet wird. Die Stromänderung während der Verzögerungszeit $t_{pd}$ der Schaltung hängt von der Stromsteilheit, also folglich von den im Umrichter auftretenden Momentanwerten der Spannungen ab. Analog ist $\Delta i_{pd,f}$ die Stromänderung des Spulenstroms innerhalb der Verzögerungszeit, wenn der Spulenstrom fällt, also vor dem Ausschalten des unteren und Einschalten des oberen Halbbrückenschalters 14, 15. Die beiden Stromänderungen können mit

$$\Delta i_{pd,f}(t) = \frac{-\dfrac{U_i}{2} - u_O(t)}{L_o} \cdot t_{pd}$$

$$\Delta i_{pd,r}(t) = \frac{\dfrac{U_i}{2} - u_O(t)}{L_o} \cdot t_{pd}$$

berechnet werden. Dabei ist $\Delta i_{pd,f}$ negativ, da der Strom sinkt. Bei der Berechnung wird die Halbbrückenschaltung als verlustlos angenommen, woraus lineare Stromverläufe resultieren. Aus den Gleichungen geht hervor, dass die Stromänderungen während der Verzögerungszeit vom Momentanwert der Ausgangsspannung $u_o$ des Umrichters abhängen:

$$u_O(t) = \hat{u}_O \cdot \sin \omega t$$

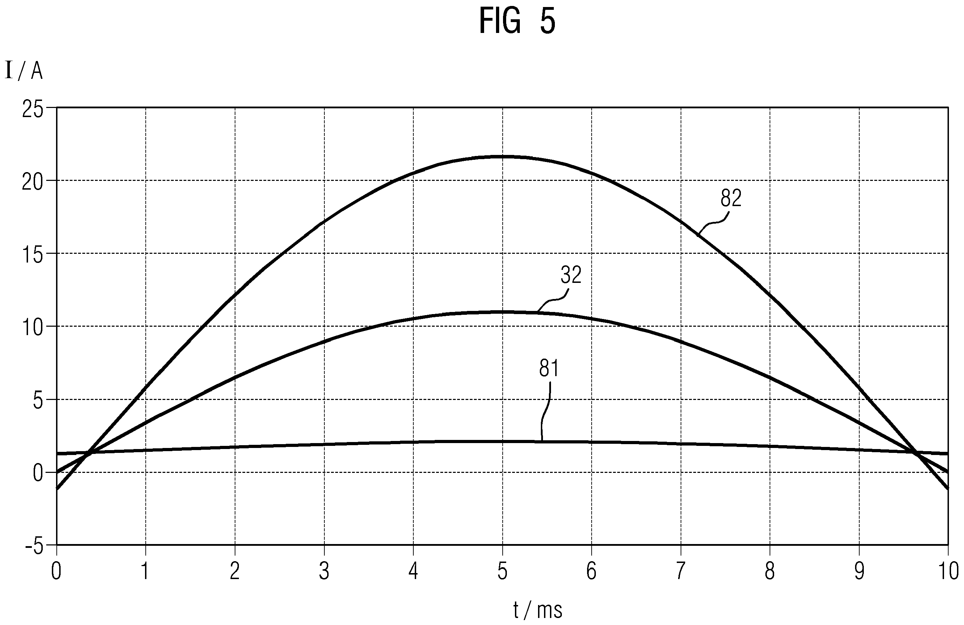

Die sich ergebenden Abschaltschwellen 81, 82 sind in Figur 5 dargestellt, zusammen mit dem Sollstrom 32 des Stromrichters 10, 50. Figur 5 zeigt dabei den Verlauf für die positive Halbschwingung des Sollstroms 32. Deutlich sichtbar ist, dass die untere Abschaltschwelle 81 nicht mehr 0 A ist, sondern einen positiven Wert hat, also näher am Sollstrom 32 liegt als die Abschaltschwelle, die sich ohne Berücksichtigung der Verzögerungszeit $t_{pd}$ ergibt. Auch ist erkennbar, dass die untere Abschaltschwelle 81 leicht veränderlich ist über die Halbschwingung hinweg, was an der Abhängigkeit von der Ausgangsspannung $u_o$ des Stromrichter 10, 50 liegt. Auch die obere Abschaltschwelle 82 rückt durch die Berücksichtigung der Verzögerungszeit näher an den Sollstrom 32 heran. So ergibt sich ein verringerter Stromrippel. Die sich ergebenden Verluste werden dadurch reduziert.

Wie bereits beschrieben, wird bevorzugt auf die Einhaltung einer maximalen Schaltfrequenz geachtet, die beispielsweise 140 kHz betragen kann. Sind die beiden Abschaltschwellen nahe beieinander, werden sie daher nicht mehr betrachtet und stattdessen mit einer festen Schaltfrequenz, eben der Maximalfrequenz geschaltet. Das passiert typischerweise im Bereich des Nulldurchgangs des Sollstroms 32. In der Figur 5 kann das beispielsweise ein Bereich sein, der sich von außerhalb des gezeigten Bereichs bis zu 1,5 ms erstreckt. Ab 8,5 ms wird wiederum mit der Maximalfrequenz geschaltet, bis - in der negativen Halbschwingung - die beiden Abschaltschwellen 81, 82 wieder weit genug auseinander liegen.

Wie weiterhin ersichtlich ist aus Figur 5, ist der Einfluss des Momentanwerts der Ausgangsspannung $u_o(t)$ auf die Abschaltschwellen 81, 82 eher gering. So ist die untere Abschaltschwelle 81 zu der Zeit t = 5 ms nur unwesentlich höher als beim Nulldurchgang des Sollstroms 32, also bei t = 0 ms oder t = 10 ms. Der Aufwand zur Berechnung kann aber für einen Mikrocontroller erheblich sein, da ein Sinus-Wert berechnet werden muss, und fällt für jeden Schaltvorgang, also mit einer Frequenz bis zur maximalen Schaltfrequenz, beispielsweise 140 kHz, an. Daher ist es vorteilhaft, eine Vereinfachung der Berechnung vorzunehmen, die wie folgt aussieht, wobei die folgenden Formeln für die positive Halbschwingung gelten:

$$\Delta i_{pd,f}(t) = \frac{-U_i / 2}{L_o} \cdot t_{pd}$$

$$\Delta i_{pd,r}(t) = \frac{\frac{U_i}{2} - \hat{u}_O}{L_o} \cdot t_{pd}$$

Dabei bezeichnet $\hat{u}_o$ die Amplitude der sinusförmigen Ausgangsspannung des Stromrichters 10, 50. An den Formeln ist erkennbar, dass keine direkte Abhängigkeit mehr von der Zeit t besteht und eine indirekte in der Hauptsache bei Änderungen der Ausgangsspannung, die aber im Vergleich zu den Schaltvorgängen äußerst selten auftreten. Für die bei Weitem meisten Schaltvorgänge sind diese Werte für die Stromänderung während der Verzögerungszeit konstante Werte.

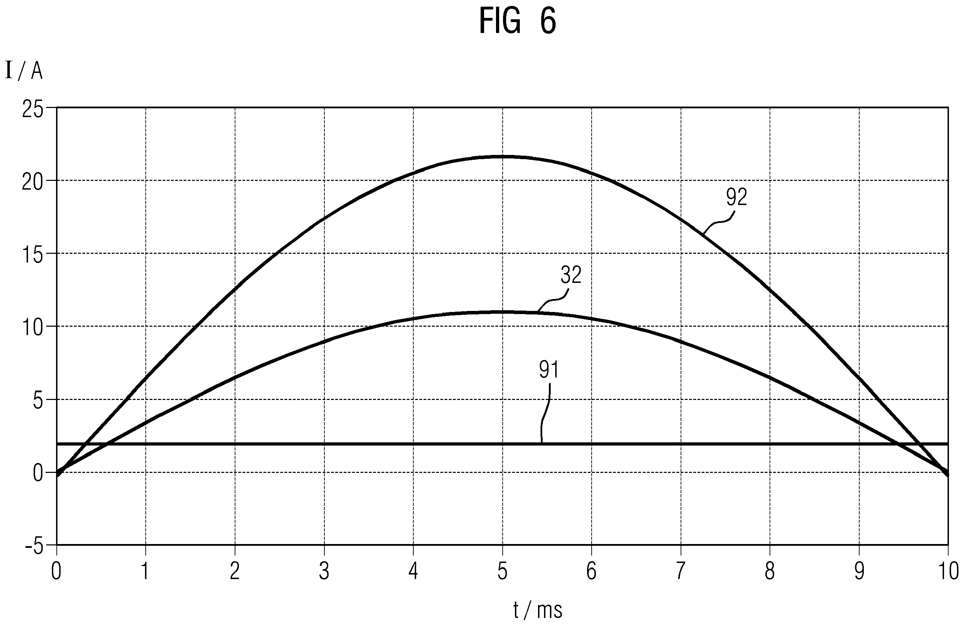

Figur 6 zeigt die sich ergebenden Abschaltschwellen 91, 92, wenn mit der beschriebenen vereinfachten Berechnung der Stromänderung gearbeitet wird. Es ergeben sich sehr ähnliche Verläufe der Abschaltschwellen 91, 92 zur Figur 5, bei denen aber bei der unteren Abschaltschwelle 91 keine zeitliche Änderung mehr vorhanden ist im Rahmen einer Halbschwingung des Sollstroms 32. Der Einfluss des Momentanwerts der Ausgangsspannung $u_o(t)$ ist auch bei der oberen Abschaltschwelle 92 nicht mehr vorhanden, wobei diese Veränderung gegenüber der oberen Abschaltschwelle 82 der Figur 5, also der genauen Berechnung, schwerer zu sehen ist.

Die Bestimmung der Einhüllenden des Spulenstroms 31 ist allerdings nicht ausreichend, um verlustarmes Schalten der Halbbrücke zu garantieren. Zusätzlich ist es wichtig, die Totzeit der Halbbrücke so zu wählen, dass der obere Halbleiterschalter 14 erst eingeschaltet wird, wenn die Spannung $U_{ds2}$ über dem unteren Halbleiterschalter 15 auf die Zwischenkreisspannung $U_{In}$ angestiegen und daher die Spannung $U_{ds1}$ über dem einzuschaltenden oberen Halbleiterschalter auf 0 V abgesunken ist. Dies entspricht dem Minimalwert 46, $t_{dead,min}$ der Totzeit $t_{dead}$. Der Maximalwert 45, $t_{dead,max}$ ist durch den Nulldurchgang des Spulenstroms und die damit sich umkehrende Stromrichtung gegeben. Somit existiert ein Totzeitfenster, in dem der obere Halbleiterschalter 14 spannungslos eingeschaltet werden kann.

Nach dem Erreichen der Zwischenkreisspannung bei $t = t_{dead,min}$ beginnt die parasitäre Body-Diode des oberen Halbleiterschalters 14 zu leiten (bzw. ein GaN-Schalter würde rückwärts leiten). Da der Vorwärtsspannungsabfall der Body-Diode bzw. des Rückwärtsleitverhaltens typischerweise deutlich größer ist als der Spannungsabfall im eingeschalteten Zustand, ist die Rückwärtsleitzeit so kurz wie möglich zu halten, um verlustoptimal zu schalten. Aus diesem Grund ist die minimale Totzeit $t_{dead,min}$ gleichzeitig auch die optimale Totzeit $t_{dead,opt}$.

Die optimale Totzeit wird durch die resonante Schwingung aus der Ausgangskapazität der Halbleiterschalter 14, 15 - die für eine Hochfrequenzbetrachtung parallel geschaltet sind -, der Filterinduktivität 21 und weiteren parasitären oder verbauten Kapazitäten und Induktivitäten vorgegeben. Es sind hierbei als weitere Kapazitäten im Prinzip alle Kapazitäten relevant, die einen Anschluss an den Potentialpunkten 11, 59a...c haben, beispielsweise eine parasitäre Kapazität der Filterinduktivität und weitere Kapazitäten, die an diesen Punkt geschaltet sind, beispielsweise um die Frequenz der Spannungsschwingung während der Totzeit zu reduzieren.

Die Ausgangskapazität der Halbleiterschalter 14, 15 ist typischerweise stark nichtlinear (abhängig von der Drain-Source-Spannung), wird zur Vereinfachung aber als linear angenommen. Somit kann die Resonanzfrequenz des Schwingkreises unter Vernachlässigung von Verlusten einfach angegeben werden:

$$f_{res} = \frac{1}{2\pi\sqrt{C_{hb}L_O}}$$

Dabei bezeichnet $C_{hb}$ die Kapazität der Parallelschaltung aus den beiden als linear (und somit als spannungsunabhängig) angenommenen Ausgangskapazitäten der Halbleiterschalter 14, 15. Der Spannungsverlauf $U_{ds2}(t)$ ergibt sich in der positiven Sinushalbschwingung in dieser Schaltung mit $\omega_{res} = 2\pi f_{res}$ zu:

$$u_{ds2}(t) = \left(u_o(t) + \frac{U_i}{2}\right) \cdot \left(1 - \cos\left(\omega_{res}t\right)\right)$$

Eine exakte Bestimmung der optimalen Totzeit erfordert, den nichtlinearen Verlauf der Ausgangskapazitäten, also ihre Spannungsabhängigkeit, heranzuziehen und damit den Verlauf der Halbbrückenspannung zu berechnen. Dies kann mithilfe eines Schaltungssimulators wie beispielsweise LTSpice erfolgen. Die optimale Totzeit ist vom Momentanwert der Ausgangsspannung $u_o(t)$, der Zwischenkreisspannung $U_i$ sowie dem Verlauf der Ausgangskapazitäten abhängig.

Die Berechnung der optimalen Totzeit muss aber ebenfalls auf einem im Stromrichter 10, 50 verwendeten Mikrocontroller durchgeführt werden und ist aufgrund der Simulationen mit nichtlinearen Komponenten aufwendig. Werden dagegen lineare Ausgangskapazitäten angenommen, kann die optimale Totzeit einfacher bestimmt werden. Zur Berechnung muss die Spannung $U_{ds2}(t)$ zum Zeitpunkt $t_{dead,opt}$ gleich der Zwischenkreisspannung $U_i$ sein. Das Einsetzen und Umformen der oben genannten Formel ergibt:

$$t_{dead,opt} = \frac{\arccos\left(1 - \dfrac{U_i}{u_O(t) + U_i}\right)}{\omega_{res}}$$

Damit kann die optimale Totzeit bestimmt werden. Die optimale Totzeit muss abhängig vom Momentanwert der Ausgangsspannung des Umrichters dann in jeder oder jeder n-ten Schaltperiode berechnet werden. Der Verlauf 71 der sich so ergebenden optimalen Totzeit ist in Figur 7 dargestellt. Zur Ermittlung dieses Verlaufs wurden die folgenden Simulationsparameter verwendet:

$U_i$ = 48 V; $\hat{u}_o$ = 17 V; $L_o$ = 2 $\mu$H; $C_{hb}$ = 1,6 nF; $f_{mot}$ = 50 Hz

Um eine weitere Vereinfachung der Ermittlung der Totzeit für einen steuernden Mikrocontroller zu ermöglichen, kann der Verlauf 71 der optimalen Totzeit durch verschiedene Funktionen angenähert werden. Dabei sollte die durch eine Näherung erhaltene Totzeit stets größer als die optimale Totzeit gewählt werden, damit spannungsloses Einschalten gewährleistet werden kann, denn wie bereits beschrieben, ist die hier berechnete optimale Totzeit gleichzeitig die minimale Totzeit.

Figur 7 zeigt zwei einfache Beispiele zur Annäherung der optimalen Totzeit durch ein einzelnes Geradenstück mit Verlauf 73 oder zwei Geradenstücke mit Verlauf 72. Prinzipiell kann der Verlauf der optimalen Totzeit durch beliebig viele Geradenstücke, also durch eine lineare Interpolation mit beliebig vielen Stützpunkten oder eine andere einfach berechenbare Funktionen wie beispielsweise ein Polynom niedriger Ordnung angenähert werden.

Die Formung des Spulenstroms, also die Festlegung der Schaltzeitpunkte, kann durch verschiedene Methoden erfolgen. So kann eine Bestimmung der erforderlichen Schaltfrequenz und des Tastgrades, also der Schaltzeitpunkte der Halbbrücke 12 ausschließlich durch Berechnungen an einer idealen Halbbrücke 12 vorgenommen werden. Dadurch ist keine Messung des Spulenstroms notwendig. Die Berechnungen werden vorzugsweise in jeder Schaltperiode durchgeführt, können aber alternativ auch weniger häufig, beispielsweise alle n Schaltperioden durchgeführt werden, wobei n eine ganze Zahl > 1 ist.

Alternativ können die Umschaltschwellen durch Komparatoren mit entsprechenden Digital-Analog-Wandlern vorgegeben werden. Dadurch sind beide Schaltvorgänge der Halbbrücke 12 durch die Schaltschwellen der Komparatoren vorgegeben. In einer weiteren Alternative kann auch eine Kombination der beiden vorher genannten Verfahren genutzt werden. Dazu erfolgt beispielsweise in der positiven Halbschwingung des Motorstromsinus die Vorgabe des Abschaltzeitpunktes des unteren Halbleiterschalters 15 durch die Detektion mithilfe eines Komparators. Der andere Schaltzeitpunkt wird durch Rechnung an einer idealen Halbbrücke 12 bestimmt. In der negativen Halbschwingung erfolgt die Umschaltung analog, allerdings mit verdrehten Schaltaktionen. Auch bei diesem Verfahren kann der Einschaltzeitpunkt des unteren Halbleiterschalters 15 in jeder Schaltperiode oder alternativ alle n Schaltperioden berechnet werden.

Bezugszeichenliste

| | |
|---|---|
| 10, 50 | Stromrichter |
| 11, 59a...c | Potentialpunkt zwischen den Halbleiterschaltern |
| 12 | Halbbrücke |
| 13 | Zwischenkreis |

| 14, 15, 51...56 | Halbleiterschalter |
|---|---|
| 16 | Steuereinrichtung |
| 17, 18, 19 | Anschlüsse |
| 21, 57a...c | Drossel |
| 22, 58a...f | Kondensator |
| 23 | LC-Filter |
| 24 | Zwischenkreis-Mittelpunkt |
| 31 | Spulenstrom |
| 32 | Sollstrom |
| 33 | Ausgangsspannung |
| 42 | Spannung über dem unteren Halbleiterschalter |
| 43, 44 | Zeitpunkte |
| 45 | maximale Totzeit |
| 46 | minimale Totzeit |
| 47 | Spannungsmaximum |
| 60a...c | Lastanschluss |
| 71 | optimale berechnete Totzeit |
| 72, 73 | genäherte Totzeiten |
| 81, 91 | untere Abschaltschwelle |
| 82, 92 | obere Abschaltschwelle |

**Patentansprüche**

1. Stromrichter (10, 50) zur elektrischen Wandlung zwischen einer Gleichspannung und einer Wechselspannung umfassend eine Serienschaltung einer ersten und einer zweiten Schalteinrichtung (14, 15, 51...56), eine am Verbindungsknoten (11, 59a...c) der beiden Schalteinrichtungen (14, 15, 51...56) angeordnete Filterspule (21, 57a...c) und eine Steuereinrichtung (16) zur Ansteuerung der Schalteinrichtungen (14, 15, 51...56), wobei die Steuereinrichtung (16) ausgestaltet ist, die angesteuerten Schalteinrichtungen (14, 15, 51...56) mit einer zeitlich veränderlichen Frequenz von wenigstens 10 Hz zu schalten und dafür Schaltzeitpunkte zu bestimmen, wobei zu jedem Schaltzeitpunkt eine der Schalteinrichtungen (14, 15, 51...56) abgeschaltet wird und nach Verstreichen einer Totzeit die jeweils andere Schalteinrichtung (14, 15, 51...56) eingeschaltet wird, wobei für jede Schaltperiode umfassend ein Einschalten und Ausschalten beider Schalteinrichtungen (14, 15, 51...56) die Schaltzeitpunkte für eine der beiden Schalteinrichtungen (14, 15, 51...56) daraus bestimmt werden, dass

   - der Stromfluss durch die Filterspule (21, 57a...c) 0 A erreicht und
   - eine festlegbare maximale Schaltfrequenz eingehalten wird.

2. Stromrichter (10, 50) nach Anspruch 1, derart ausgestaltet, dass zur Bestimmung des Zeitpunkts, zu dem der der Strom durch die Filterspule (21, 57a...c) 0 A erreicht, eine Strommessung und ein Vergleich mit einem Schwellwert von 0 A verwendet wird.

3. Stromrichter (10, 50) nach Anspruch 1, derart ausgestaltet, dass zur Bestimmung des Zeitpunkts, zu dem der Strom durch die Filterspule (21, 57a...c) 0 A erreicht, eine Strommessung und ein Vergleich mit einem von 0 A verschiedenen Schwellwert verwendet wird, wobei der Schwellwert unter Berücksichtigung einer Verzögerungszeit ermittelt wird, wobei die Verzögerungszeit der zeitliche Abstand zwischen dem Erreichen des Schwellwerts und der tatsächlichen Umschaltung der Schalteinrichtung (14, 15, 51...56) ist.

4. Stromrichter (10, 50) nach Anspruch 3, derart ausgestaltet, dass der Schwellwert unter Einbeziehung der momentanen Ausgangsspannung des Stromrichters (10, 50) bestimmt wird.

5. Stromrichter (10, 50) nach Anspruch 4, derart ausgestaltet, dass ein erster Schwellwert $I_{t1}$ in der positiven Halbschwingung eines Ausgangsstroms des Stromrichters (10, 50) berechnet wird zu

$$I_{t1} = \frac{\frac{1}{2}U_i - u_o(t)}{L_o} \cdot t_{pd}$$

wobei $U_i$ die Zwischenkreisspannung, $u_o(t)$ die zum Zeitpunkt t vorliegende Ausgangsspannung, $L_o$ die Induktivität der Filterspule und $t_{pd}$ die Verzögerungszeit ist.

6. Stromrichter (10, 50) nach Anspruch 1, derart ausgestaltet, dass ein Teil der Schaltzeitpunkte durch Berechnung ermittelt wird.

7. Stromrichter (10, 50) nach Anspruch 1, derart ausgestaltet, dass ein Teil der Schaltzeitpunkte dadurch bestimmt wird, dass der Strom durch die Filterspule (21, 57a...c) einen zweiten Stromschwellwert erreicht, wobei der zweite Stromschwellwert für diese Schaltperiode unter Berücksichtigung des momentanen Ausgangsstroms des Stromrichters (10, 50) und dem ersten Stromschwellwert ermittelt wird.

8. Stromrichter (10, 50) nach Anspruch 1, derart ausgestaltet, dass für wenigstens einen Teil der Schaltvorgänge eine jeweils eigene Totzeit bestimmt und verwendet wird, wobei die Totzeit unter Berücksichtigung von wenigstens den Ausgangskapazitäten der Schalteinrichtungen (14, 15, 51...56) und der Filterinduktivität (21, 57a...c) bestimmt wird.

9. Stromrichter (10, 50) nach Anspruch 8, derart ausgestaltet, dass die Totzeit unter Berücksichtigung der momentanen Ausgangsspannung berechnet wird.

10. Stromrichter (10, 50) nach Anspruch 8, derart ausgestaltet, dass die Totzeit durch eine Polynomfunktion oder trigonometrische Funktion dem Ergebnis einer Berechnung unter Berücksichtigung der momentanen Ausgangsspannung angenähert wird.

11. Stromrichter (10, 50) nach einem der vorangehenden Ansprüche, bei dem eine oder beide Schalteinrichtungen (14, 15, 51...56) einen GaN-basierten Schalter oder einen SiC-basierten Schalter aufweisen.

12. Verfahren zum Betrieb eines Stromrichters (10, 50) zur elektrischen Wandlung zwischen einer Gleichspannung und einer Wechselspannung, bei dem

    - eine erste und eine zweite Schalteinrichtung (14, 15, 51...56) eine Serienschaltung bilden und mit einer zeitlich veränderlichen Frequenz von wenigstens 10 Hz geschaltet werden,
    - dafür Schaltzeitpunkte bestimmt werden,
    - zu jedem Schaltzeitpunkt eine der Schalteinrichtungen (14, 15, 51...56) abgeschaltet wird und nach Verstreichen einer Totzeit die jeweils andere Schalteinrichtung (14, 15, 51...56) eingeschaltet wird,
    - für jede Schaltperiode umfassend ein Einschalten und Ausschalten beider Schalteinrichtungen (14, 15, 51...56) die Schaltzeitpunkte für eine der beiden Schalteinrichtungen (14, 15, 51...56) daraus bestimmt werden, dass der Stromfluss durch die Filterspule (21, 57a...c) 0 A erreicht und eine festlegbare maximale Schaltfrequenz eingehalten wird.

FIG 1

FIG 2

EP 4 016 829 A1

# FIG 3

EP 4 016 829 A1

FIG 4

# FIG 5

EP 4 016 829 A1

## FIG 6

EP 4 016 829 A1

# FIG 7

EP 4 016 829 A1

Europäisches
Patentamt

European
Patent Office

Office européen
des brevets

**EUROPÄISCHER RECHERCHENBERICHT**

Nummer der Anmeldung

EP 20 21 4810

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CH 711 454 A2 (ETH ZÜRICH ETH TRANSFER HG E 47-49 [CH]) 28. Februar 2017 (2017-02-28) * Abbildungen 1,2 * * Absatz [0012] * * Absatz [0024] - Absatz [0029] * * Anspruch 6 * ----- | 1-12 | INV. H02M7/48 H02M7/5395 H02M1/00 H02M1/08 H02M1/38 |
| A | US 2007/109822 A1 (KUAN KAN-SHENG [TW]) 17. Mai 2007 (2007-05-17) * Abbildung 8 * ----- | 1-12 | |
| A | US 2015/062988 A1 (AMIRAHMADI AHMADREZA [US] ET AL) 5. März 2015 (2015-03-05) * das ganze Dokument * ----- | 1-12 | |
| A | US 2013/314062 A1 (NOTMAN ANDREW [GB] ET AL) 28. November 2013 (2013-11-28) * Absatz [0019] * * Absatz [0103] - Absatz [0105] * ----- | 3-5 | |
| A | DE 10 2012 208458 A1 (BOSCH GMBH ROBERT [DE]) 21. November 2013 (2013-11-21) * Absatz [0003] - Absatz [0005] * * Absatz [0009] * * Absatz [0044] * ----- | 3-5,8-10 | RECHERCHIERTE SACHGEBIETE (IPC) H02M |

Der vorliegende Recherchenbericht wurde für alle Patentansprüche erstellt

| Recherchenort | Abschlußdatum der Recherche | Prüfer |
|---|---|---|
| Den Haag | 21. Mai 2021 | van der Weiden, Ad |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 21 4810

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-05-2021

| Im Recherchenbericht angeführtes Patentdokument | Datum der Veröffentlichung | Mitglied(er) der Patentfamilie | Datum der Veröffentlichung |
|---|---|---|---|
| CH 711454 A2 | 28-02-2017 | KEINE | |
| US 2007109822 A1 | 17-05-2007 | US 2007109822 A1 | 17-05-2007 |
| | | US 2008130326 A1 | 05-06-2008 |
| US 2015062988 A1 | 05-03-2015 | KEINE | |
| US 2013314062 A1 | 28-11-2013 | CN 102498653 A | 13-06-2012 |
| | | CN 102714462 A | 03-10-2012 |
| | | EP 2457317 A2 | 30-05-2012 |
| | | GB 2472111 A | 26-01-2011 |
| | | GB 2472112 A | 26-01-2011 |
| | | GB 2472113 A | 26-01-2011 |
| | | GB 2472114 A | 26-01-2011 |
| | | GB 2472115 A | 26-01-2011 |
| | | GB 2482424 A | 01-02-2012 |
| | | GB 2483002 A | 22-02-2012 |
| | | GB 2483003 A | 22-02-2012 |
| | | GB 2486827 A | 27-06-2012 |
| | | KR 20120039726 A | 25-04-2012 |
| | | TW 201108580 A | 01-03-2011 |
| | | US 2011018507 A1 | 27-01-2011 |
| | | US 2011018515 A1 | 27-01-2011 |
| | | US 2011018516 A1 | 27-01-2011 |
| | | US 2011018588 A1 | 27-01-2011 |
| | | US 2011050185 A1 | 03-03-2011 |
| | | US 2013314062 A1 | 28-11-2013 |
| | | WO 2011010141 A2 | 27-01-2011 |
| | | WO 2011010142 A2 | 27-01-2011 |
| | | WO 2011010143 A2 | 27-01-2011 |
| | | WO 2011010144 A2 | 27-01-2011 |
| | | WO 2011010151 A2 | 27-01-2011 |
| DE 102012208458 A1 | 21-11-2013 | CN 103427701 A | 04-12-2013 |
| | | DE 102012208458 A1 | 21-11-2013 |
| | | US 2013307461 A1 | 21-11-2013 |

EPO FORM P0461

Für nähere Einzelheiten zu diesem Anhang : siehe Amtsblatt des Europäischen Patentamts, Nr.12/82